# EUROPÄISCHE PATENTSCHRIFT

(11) **EP 2 143 752 B1**
(45) Veröffentlichungstag und Bekanntmachung des Hinweises auf die Patenterteilung: **10.11.2010**
(21) Anmeldenummer: 08104723.5
(22) Anmeldetag: 11.07.2008
(51) Int. Cl.: C08G 69/26, C08L 77/02, C08L 77/06, C08J 5/18, B29C 55/12, B32B 27/34

(54) **Copolyamid sowie Blends und Folien mit einem solchen Copolyamid**
Copolyamide as well as blends and films comprising this copolyamide
Copolyamide ainsi que mélanges et films comprenant ce copolyamide

(43) Veröffentlichungstag der Anmeldung: 13.01.2010
(73) Patentinhaber: EMS-PATENT AG, 7013 Domat / Ems (CH)
(72) Erfinder: Pfleghar, Mark, 7013 Domat/Ems (CH); Zaschke, Gerhard, 7402 Bonaduz (CH)
(74) Vertreter: Bremi, Tobias Hans

(56) Entgegenhaltungen:
- EP-A- 0 617 072
- GB-A- 1 558 800
- US-A- 5 028 689

## Beschreibung

### TECHNISCHES GEBIET

Die vorliegende Erfindung betrifft das Gebiet der Copolyamide und insbesondere der Copolyamide zur Verwendung als Material, bevorzugt in einem Blend mit anderen Polyamiden und/oder Copolyamiden, zur Herstellung von Folien als Verpackungsmaterial, beispielsweise biaxial verstreckten Mehrschichtfolien mit sehr gutem Schrumpfverhalten.

### STAND DER TECHNIK

Aus der EP 0617072 A1 sind transparente Copolyamide bekannt, welche eine hohe Barrierewirkung für Flüssigkeiten und Gase aufweisen. Die in diesem Dokument beschriebenen Copolyamid-Systeme basieren, im Unterschied zu den erfindungsgemässen Copolyamiden, auf einem Anteil von höchstens 65 Mol-% Azelainsäure, wobei dieses wenigstens teilweise ersetzt sein kann durch Sebazinsäure. Es werden in diesem Dokument auch Mehrschichtfolien aus diesen Copolymeren beschrieben und darauf hingewiesen, dass diese eine gute biaxiale Reckbarkeit, einen hohen Schrumpf sowie eine hohe Transparenz und eine ausreichende Flexibilität aufweisen.

Aus der WO 2007/047268 sind ebenfalls derartige Folien zur Verwendung als Verpackungsmaterial für Nahrungsmittel bekannt, wobei hier als Folienmaterial u.a. Mischungen (Blends) aus Polyamiden respektive Copolyamiden vorgeschlagen werden, und wobei entsprechende Mehrschicht-Folien stets eine Schicht aus EVOH enthalten. Grundsätzlich ähnliche Systeme ebenfalls mit einer Barriereschicht aus EVOH sind aus der WO 2006/063208 bekannt. Aus der WO 2006/063283 der gleichen Anmelderin mit der im wesentlichen gleichen Beschreibung sind die gleichen Systeme bekannt, hier jedoch charakterisiert durch ein spezifisches Schrumpfverhalten und nicht durch die zusätzliche Anwesenheit einer Barriereschicht aus EVOH. Keines der Copolymere der in diesen internationalen Schriften genannten Blends verfügt über eine Zusammensetzung nach der vorliegenden Erfindung oder legt eine solche nahe.

### DARSTELLUNG DER ERFINDUNG

Der Erfindung liegt demnach unter anderem die Aufgabe zugrunde, ein Copolyamid-Material zur Verfügung zu stellen, welches insbesondere in einem Blend mit anderen Polyamiden als Schicht in einer Mehrschichtfolie deren Schrumpfverhalten verbessert. Das Material soll es insbesondere erlauben, transparente Mehrschichtfolien für Verpackungszwecke mit einem niedrigen Kaltschrumpf sowie einem grossen Heissschrumpf herzustellen.

Die Lösung dieser Aufgabe wird unter anderem dadurch erreicht, dass ein Copolyamid hergestellt wird, indem es polykondensiert wird aus einem Diaminanteil und einem Disäureanteil, wobei der Diaminanteil gebildet wird aus Hexamethylendiamin und wobei sich der Disäureanteil zusammensetzt aus
A. Azelainsäure;
B. Sebazinsäure;
C. Isophthalsäure;
D. Adipinsäure;
wobei die Summe der Anteile A. und B. wenigstens 70 Mol-% ausmacht, wobei der Anteil C. 3 - 15 Mol-% ausmacht, wobei der Anteil D. 0 - 27 Mol-% ausmacht, und wobei die Summe der Anteile A.-D. die 100 Mol-% des gesamten Disäureanteils ausmacht.

Es zeigt sich, dass der insbesondere ungewöhnlich hoher Anteil an den Komponenten A. und B. im Vergleich zum Stand der Technik in Kombination mit einem ganz bestimmten Bereich des Anteils von C. die oben erwähnten vorteilhaften Eigenschaften zur Verfügung stellen kann. Dies insbesondere dann, wenn ein derartiges Copolyamid als Blend verwendet wird und dann in Form einer Mehrschichtfolie zu den oben angegebenen Zwecken eingesetzt wird, wobei sowohl das Blend als auch die entsprechenden Mehrschichtfolien weiter unten noch weiter im Detail erläutert werden.

Ein Anteil C. von mehr als 15 Mol-% senkt die Kristallinität des Copolyamides und macht es ausserdem steif und spröde.

Gemäss einer bevorzugten Ausführungsform eines solchen Copolyamids macht die Summe der Anteile A. und B. wenigstens 75 Mol-%, bevorzugt wenigstens 85 Mol-%, insbesondere bevorzugt im Bereich von 90 - 97 Mol-% aus.

Das Mol-Verhältnis von A. zu B. liegt bevorzugtermassen im Bereich von 3:1 bis 1:1, bevorzugt im Bereich von 2:1 bis 1:1, besonders bevorzugt im Bereich von 1,9:1 bis 1,2:1. Sowohl die Komponente A., als auch die Komponente B. liegen also zwingend vor, das heisst, dass beide in einem Anteil von mehr als 0 Mol-% vorhanden sind.

Eine weitere bevorzugte Ausführungsform eines solchen Copolyamids ist dadurch gekennzeichnet, dass der Anteil C. im Bereich von 5 - 12 Mol-%, bevorzugt im Bereich von 8 - 10 Mol-% ausmacht.

Eine weitere bevorzugte Ausführungsform eines solchen Copolyamids ist dadurch gekennzeichnet, dass der Anteil D. 0 - 10 Mol-% ausmacht. Ganz besonders bevorzugt sind Copolyamide, welche keinen Anteil D. enthalten.

Des weiteren betrifft die vorliegende Erfindung, wie bereits eingangs erwähnt, ein Polymer-Blend enthaltend ein Copolyamid, wie es oben beschrieben wurde. Gemäss einer bevorzugten Ausführungsformen eines solchen Blends ist dieses dadurch gekennzeichnet, dass es aus folgenden Komponenten besteht:
a. Copolyamid 6/66 und/oder Polyamid 6;
b. Copolyamid, wie es oben allgemein dargestellt worden ist;
sowie optional
c. Copolyamid 6I/6T;
d. Copolyamid 6/66/12
e. Additive.

Bevorzugte Kombinationen dieser Anteile sind dabei wie folgt:
Der Anteil a. liegt im Bereich von 50 - 90 Gew.-%, der Anteil b. liegt im Bereich von 10 - 50 Gew.-%, der Anteil c. liegt im Bereich von 0 - 10 Gew.-%, der Anteil d. liegt im Bereich von 0 - 30 Gew.-%, und der Anteil von e. liegt im Bereich von 0 - 10 Gew.-%, wobei sich die Komponenten a. bis e. zu 100 Gew.-% addieren.

Weiterhin ist es spezifischer bevorzugt, wenn folgende Verhältnisse gewählt werden:
Der Anteil a. liegt im Bereich von 50 - 80 Gew.-%, bevorzugt im Bereich von 60-75 Gew.-%, der Anteil b. liegt im Bereich von 20 - 50 Gew.-% , bevorzugt im Bereich von 25-40 Gew.-%, der Anteil c. liegt im Bereich von 1 - 10 Gew.-% , bevorzugt im Bereich von 1-5 Gew.-%, der Anteil d. liegt im Bereich von 0 - 20 Gew.-%, , bevorzugt im Bereich von 1-10 Gew.-% und der Anteil von e. liegt im Bereich von 0.1 - 10 Gew.-%, , bevorzugt im Bereich von 0.1-5 Gew.-%, wobei sich die Komponenten a. bis e. zu 100 Gew.-% addieren.

Wird die Komponente b. mit weniger als 10 Gew.-% eingesetzt, zeigt sich häufig keine Verbesserung des Schrumpfverhaltens (Heissschrumpf bzw. Kaltschrumpf) mehr. Bei über 50 Gew.-% der Komponenten b. ist häufig keine zusätzliche Verbesserung des Schrumpfverhaltens feststellbar. Das Schrumpfverhalten bleibt dabei konstant. Mehr als 50 Gew.-% der Komponente b. ist jedoch normalerweise zunehmend unwirtschaftlich.

Wird die Komponente c. zu mehr als 10 Gew.-% verwendet, wird die Mehrschichtfolie für viele Anwendungen zu steif.

Die Komponente d. ist dann zu verwenden, wenn weiche, also flexible Materialien gewünscht werden, dabei gilt: Je höher der Anteil von d., desto höher ist die Flexibilität. Wird die Komponente c. zu mehr als 30 Gew.-% verwendet, wird die Mehrschichtfolie für viele Anwendungen zu weich, d.h. zu flexibel. Die Verwendung der Komponenten c. führt ausserdem zu einer sehr guten Haptik der Mehrschichtfolie, sofern das erfindungsgemässe Blend in einer der beiden oder den beiden Aussenschichten der Folie verwendet wird.

Ganz spezifisch ist es des weiteren bevorzugt, wenn für das Blend folgende Verhältnisse gewählt werden

Der Anteil a. liegt im Bereich von 60 - 75 Gew.-%, der Anteil b. liegt im Bereich von 25 - 40 Gew.-%, der Anteil c. liegt im Bereich von 1 - 5 Gew.-%, der Anteil d. liegt im Bereich von 1 - 10 Gew.-%, und der Anteil von e. liegt im Bereich von 0.1 - 5 Gew.-%, wobei sich auch hier die Komponenten a. bis e. zu 100 Gew.-% addieren.

Ein Polymer-Blend, wie es oben definiert ist, ist gemäss einer weiter bevorzugten Ausführungsform dadurch gekennzeichnet, dass das Copolyamid 6I/6T der Komponente c. bei einer Summe der Disäuren von 100 Mol-% maximal 40 Mol-%, bevorzugt maximal 35 Mol-%, insbesondere bevorzugt 20 - 35 Mol-% Terephthalsäure enthält.

Eine weitere bevorzugten Ausführungsform ist dadurch gekennzeichnet, dass das Copolyamid 6I/6T der Komponente c. eine durch DSC, gemessen bei einer Aufheizrate von 20 K/min, bestimmte Schmelzwänne von maximal 5 J/g, bevorzugt von maximal 3 J/g, insbesondere bevorzugt im Bereich von 0 - 1 J/g aufweist.

Gemäss einer weiteren Ausführungsform besteht das Copolyamid PA 6/66/12 der Komponente d. aus 50 - 70 Mol-%, bevorzugt 53 - 65 Mol-% der Wiederholungseinheit 6, 10 - 30 Mol-%, bevorzugt 15 - 25 Mol-% der Wiederholungseinheit 66 und 10 - 40 Mol-%, bevorzugt 10 - 30 Mol-% der Wiederholungseinheit 12, wobei besonders bevorzugt wird, dass das Copolyamid PA 6/66/12 der Komponente d. aus im wesentlichen 64 Mol-% der Wiederholungseinheit 6, im wesentlichen 23 Mol-% der Wiederholungseinheit 66 und im wesentlichen 13 Mol-% der Wiederholungseinheit 12, besteht.

Den erfindungsgemässen Blends können als Komponente e. 0 bis 10 Gew.-%, bevorzugt 0.1 bis 10 Gew.-%, besonders bevorzugt 0.1 bis 5 Gew.-% Additive zugesetzt werden. Die Menge jedes einzelnen Additivs beträgt normalerweise maximal 4 Gew.-%.

Das Additiv ist bevorzugt ausgewählt aus der Gruppe bestehend aus anorganischen Stabilisatoren, organischen Stabilisatoren, Gleitmitteln, Farbstoffen, anorganischen Pigmenten, organischen Pigmenten, Antistatika, Antiblockmitteln, Nukleierungsmitteln, Kristallisationsbeschleunigern, Kristallisationsverzögerem, Leitfähigkeitsadditiven, Entformungsmitteln, optischen Aufhellern, Haftvermittlern, photochromen Additiven, Füll- und Verstärkungsstoffen, insbesondere nanoskalige Füll- und Verstärkungsstoffen, wie z.B. Mineralen mit einer Partikelgrösse von maximal 100 nm oder unmodifizierten oder modifizierten, natürliche oder synthetische Phyllosilicaten oder Mischungen davon.

Die Additive können den erfindungsgemässen Blends als Pulver bzw. Flüssigkeit oder als Masterbatches zugegeben werden. Vorzugsweise in Form von einem oder mehreren Masterbatches. Der Träger des Masterbatches ist dabei ausgewählt aus einer Gruppe, die aus Polyamid, Polyolefin, funktionalsiertem Polyolefin, Ionomer, und Polymethylmethacrylat, bevorzugt aus Polyamid, funktionalisiertern Polyolefin und Ionomer besteht. Besonders bevorzugt handelt es sich bei dem Träger um ein Polyamid.

Als Stabilisatoren bzw. Alterungsschutzmittel können in den erfindungsgemäßen Blends, z.B. Antioxidantien, Antiozonantien, Lichtschutzmittel, UV-Stabilisatoren, UV-Absorber oder UV-Blocker eingesetzt werden.

Als Phyllosilicate können in den erfindungsgemäßen Blends, z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt (modifiziert), aber auch unbehandelt (unmodifiziert) sein.

Die in dieser Schrift verwendeten Abkürzungen zur Bezeichnungen von Polyamiden sind in Tab. 1 wiedergegeben.

**Tabelle 1 Erklärung der verwendeten Abkürzungen zur Bezeichnung von Polyamiden**

| **Polyamid** | **Erklärung** |
|---|---|
| PA 6 | Polyamid 6 aus ε-Caprolactam* |
| PA 6/66** | Copolyamid 6/66 aus ε-Caprolactam, Hexamethylendiamin und Adipinsäure |
| PA 6/66/12 | Copolyamid 6/66/12 aus ε-Caprolactam, Hexamethylendiamin, Adipinsäure und Laurinlactam* |
| PA 6/69 | Copolyamid 6/69 aus ε-Caprolactam, Hexamethylendiamin und Azelainsäure |
| PA 66/610 | Copolyamid 66/610 aus Hexamethylendiamin, Adipinsäure und Sebazinsäure |
| PA 69/610/6I | Copolyamid 69/610/6I aus Hexamethylendiamin, Azelainsäure, Sebazinsäure und Isophthalsäure |
| PA 69/66/6I | Copolyamid 69/66//6I aus Hexamethylendiamin, Azelainsäure, Adipinsäure -und Isophthalsäure |
| PA 66/69/610/6I | Copolyamid 66/69/610/6I aus Hexamethylendiamin, Adipinsäure, Aze lainsäure, Sebazinsäure und Isophthalsäure |
| PA 6I/6T | Copolyamid 6I/6T aus Hexamethylendiamin, Isophthalsäure und Tere phthalsäure |
| | |
| * statt ε-Caprolactam bzw. Laurinlactam kann auch ω-Aminohexansäure bzw. ω-Aminododecansäure verwendet werden | |
| ** Die durch einen Schrägstrich getrennten Einheiten werden auch als Wiederholungseinheiten bezeichnet | |

Des weiteren betrifft die vorliegende Erfindung eine biaxial orientierte, transparente Mehrschichtfolie, wobei in der Folie wenigstens eine Schicht aus einem Polymer-Blend, wie er oben angegeben wird, gebildet wird.

Vom Markt (Endkunden) werden für biaxial orientierte Mehrschichtfolien, wie sie für Schrumpffolien bzw. Schrumpfbeutel verwendet werden, durch die gesteigerten Anforderungen ein hoher Heissschrumpf und ein niedriger Kaltschrumpf gefordert. Entsprechend ist die Mehrschichtfolie bevorzugtermassen dadurch gekennzeichnet durch einen Heissschrumpf bei 90 °C in wenigstens einer Richtung, bevorzugt in Maschinenrichtung und quer zur Maschinenrichtung, von wenigstens 35 %, bevorzugt von wenigstens 40 % und einen Kaltschrumpf bei 23 °C in wenigstens einer Richtung, bevorzugt in Maschinenrichtung und quer zur Maschinenrichtung, von maximal 6% oder maximal 5 %, bevorzugt von maximal 3 %, besonders bevorzugt von 0 - 4 %, insbesondere bevorzugt von 0 - 3 %. Bei mehr als 5 % Kaltschrumpf kann es bei der Lagerung zur teilweisen Verblockung der Folie im Folienwickel kommen und dadurch zu Problemen beim Abwickeln bzw. das Abwickeln kann dadurch gänzlich verunmöglicht werden.

Im Fall einer biaxial orientierten Mehrschichtfolie ist dabei bevorzugtermassen die Dicke wenigstens einer, bevorzugt jeder einzelnen Schicht aus dem oben beschriebenen Polymer-Blend 4 - 20 µm, bevorzugt 5 - 15 µm, besonders bevorzugt 6-10 µm, wobei bevorzugtermassen die Gesamtdicke der Mehrschichtfolie im Bereich von 20 - 150 µm, bevorzugt im Bereich von 25 - 100 µm, besonders bevorzugt im Bereich von 30 - 80 µm liegt.

Als Nebenanforderung wird vom Markt für biaxial orientierte Mehrschichtfolien, wie sie für Schrumpffolien bzw. Schrumpfbeutel verwendet werden, eine Lichttransmission von wenigstens 90 %, bevorzugt wenigstens 93 % bei einer Gesamtdicke der Folie von 45 µm. Der Haze (Trübung) dieser biaxial orientierten Mehrschichtfolie liegt bei höchstens 10 %, bevorzugt höchstens 7 %, besonders bevorzugt 0 - 6 % bei einer Gesamtdicke der Folie von 45 µm verlangt.

Gemäss einer weiteren bevorzugten Ausführungsform ist eine solche Folie des weiteren dadurch gekennzeichnet, dass es sich um eine biaxial orientierte Mehrschichtfolie handelt, welche aus 3 - 11 Schichten, besonders bevorzugt 5 - 11 Schichten, ganz besonders bevorzugt 5 - 9 Schichten besteht, wobei 1 - 5, besonders bevorzugt 1 - 3, ganz besonders bevorzugt 2 - 3 dieser Schichten aus einem Polymer-Blend wie oben beschrieben bestehen. Diese Schichten aus einem solchen Polymer-Blend können eingebettet sein und/oder können aussen liegen und eine oder beide der Oberflächen der Folie bilden.

Gemäss einer weiteren bevorzugten Ausführungsform handelt es sich um eine biaxial orientierte Mehrschichtfolie, welche 1, 2 oder 3, besonders bevorzugt 2 oder 3 eingebettete Schichten aus einem solchen Polymer-Blend enthält.

Gemäss einer weiteren bevorzugten Ausführungsform handelt es sich um eine biaxial orientierte Mehrschichtfolie mit 5 - 9 Schichten, welche 1, 2 oder 3, besonders bevorzugt 2 oder 3 eingebettete Schichten aus einem solchen Polymer-Blend enthält.

Beispiele für die Materialien der anderen Schichten solch einer biaxial orientierten Mehrschichtfolie sind Polyolefine, funktionalisierte Polyolefine, Polyolefincopolymere, funktionalisierte Polyolefincopolymere, Ionomere, Polyamide, Polystyrol, Polyethylenterephthalat, Polybutylenterephthalat, EVOH, chlorierte Polymere, Regrinds oder Mischungen davon. Die Bezeichnung Polyethylenterephthalat bzw. Polybutylenterephthalat umfasst dabei alle dem Fachmann bekannten Copolymere des Polyethylenterephthalats bzw. Polybutylenterephthalats mit geringen Mengen anderer Disäuren und/oder Diolen, wie z.B. Isophthalsäure, Cyclohexandicarbonsäure, Naphthalindicarbonsäure, Butandiol, Diethylenglykol oder Cyclohexandimethanol, z.B. zur Beeinflussung der Kristallisationsfähigkeit.

Das erfindungsgemässe Blend kann auch die Funktion einer Stützschicht übernehmen.

Im Folgenden sind bevorzugte Beispiele für erfindungsgemässe Mehrschichtstrukturen angegeben, wobei die Aufzählung der Schichten von Aussen nach Innen erfolgt und die einzelnen Schichten durch einen Schrägstrich (/) getrennt sind.

| | |
|---|---|
| 3-Schicht: | BLD/HV/SIS |
| | STS/BLD/SIS |
| | BAR/BLD/SIS |
| | BLD/BAR/SIS |
| 4-Schicht: | STS/BLD/HV/SIS |
| | STS/HV/BLD/SIS |
| | BAR/HV/BLD/SIS |
| | BLD/BAR/HV/SIS |
| 5-Schicht: | STS/HV/BLD/HV/SIS |
| | BAR/HV/BLD/HV/SIS |
| | BLD/HV/BAR/HV/SIS |
| | BLD/HV/STS/HV/SIS |
| | BLD/BLD/BAR/BLD/SIS |
| | STS/BLD/BAR/BLD/STS |
| | STS/BLD/BAR/BLD/SIS |
| 6-Schicht: | BLD/HV/STS/HV/BAR/SIS |
| | BLD/BLD/BAR/BLD/HV/SIS |
| | STS/BLD/BAR/BLD/HV/SIS |
| | STS/HV/BLD/BAR/BLD/SIS |
| 7-Schicht: | STS/HV/BLD/BAR/BLD/HV/SIS |
| | BLD/HV/STS/HV/BAR/HV/SIS |
| | BLD/HV/STS/HV/BLD/HV/SIS |
| | BAR/HV/STS/BLD/STS/BLD/SIS |
| | STS/HV/BLD/HV/BAR/HV/SIS |
| | STS/BLD/BLD/BAR/BLD/HV/SIS |
| 8-Schicht: | STS/HV/BLD/BAR/BLD/HV/STS/SIS |
| | STS/STS/HV/BLD/BAR/BLD/HV/SIS |
| | BLD/HV/STS/BAR/STS/HV/BLD/SIS |
| 9-Schicht: | STS/HV/BLD/HV/BAR/HV/BLD/HV/SIS |
| | STS/HV/BLD/BAR/BLD/BAR/BLD/HV/SIS |
| | STS/STS/HV/BLD/BAR/BLD/HV/STS/SIS |
| | STS/HV/BLD/STS/BLD/STS/BLD/HV/SIS |
| 10-Schicht: | STS/HV/BLD/BAR/BLD/BAR/BLD/STS/HV/SIS |
| | BLD/STS/BLD/BAR/BLD/BAR/BLD/STS/HV/SIS |
| 11-Schicht: | BLD/STS/STS/BLD/BAR/BLD/BAR/BLD/STS/HV/SIS |
| | BLD/HV/STS/BLD/BAR/BLD/BAR/BLD/STS/HV/SIS |
| | STS/HV/BLD/BAR/BLD/BAR/BLD/HV/STS/HV/SIS |

Als Schichtmaterialien können bevorzugt beispielsweise verwendet werden:
- STS:: Polyolefin, Polyamid, Polystyrol, Polyethylenterephthalat, Polybutylen- terephthalat, Regrind
- HV:: Polyolefin, funktionalisiertes Polyolefin, Polyamid, Mischung aus Polyolefinco- polymer und Polyolefin
- BAR:: EVOH, MX-Nylon, teilaromatisches Polyamid, Polyvinylidenchlorid, Silicium- dioxid-Coating (SiO₂)
- SIS:: Polyolefin, funktionalisiertes Polyolefin, Polyolefincopolymer, funktionalisiertes Polyolefincopolymer, Polyamid, Ionomer

Es können sowohl verschiedene Schichtmaterialien einer Gruppe (STS, HV, BAR oder SIS) in verschiedenen Schichten einer Mehrschichtfolie, als auch Mischungen der Schichtmaterialien in der gleichen Schicht verwendet werden. Beispielsweise kann bei Folienstrukturen mit mehreren Stützschichten eine davon aus Regrind, die anderen hingegen aus Polyolefin, Polyamid, Polystyrol, Polyethylenterephthalat oder Polybutylenterephthalat gefertigt werden. Die Stützschichten können auch aus verschiedenen Polyamiden gebildet werden. Als Mischungen kommen z.B. Polyolefin-funktionalisiertes Polyolefin, Ionomer-Polyamid, EVOH-Polyamid, funktionalisiertes Polyolefincopolymer-Polyamid, Polyolefincopolymer-Ionomer, Polyamid-Polyamid, EVOHteilaromatisches Polyamid, MX-Nylon-Polyamid, MX-Nylon-teilaromatisches Polyamid oder Polyamid-teilaromatisches Polyamid in Frage.

Bei Mehrschichtstrukturen, in denen die Barriereschicht aussen liegt, werden als Schichtmaterial besonders bevorzugt MX-Nylon, teilaromatisches Polyamid, Polyvinylidenchlorid oder Siliciumdioxid-Coating (SiO₂) eingesetzt.

Abkürzungen:
- BLD:: erfindungsgemässes Blend
- HV:: Haftvermittler
- SIS:: Siegelschicht
- STS:: Stützschicht
- BAR:: Barriereschicht

Besonders bevorzugt sind folgende Strukturen:

| | |
|---|---|
| 5-Schicht: | STS/HV/BLD/HV/SIS |
| | BAR/HV/BLD/HV/SIS |
| | BLD/HVBAR/HV/SIS |
| | STS/BLD/BAR/BLD/SIS |
| | STS/BLD/BAR/BLD/STS |
| 7-Schicht: | STS/HV/BLD/BAR/BLD/HV/SIS |
| | BAR/HV/STS/BLD/STS/BLD/SIS |
| 9-Schicht: | STS/STS/HV/BLD/BAR/BLD/HV/STS/SIS |
| | STS/HV/BLD/BAR/BLD/HV/STS/HV/SIS |
| | STS/HVBLD/HVBAR/HV/BLD/HV/SIS |

Die biaxial orientierte Mehrschichtfolie ist bevorzugtermassen **dadurch gekennzeichnet, dass** ihr Reckverhältnis in Maschinenrichtung 2.7 bis 3.5, besonders bevorzugt 2.8 bis 3.2 und quer zur Maschinennrichtung 2.8 bis 4.0, besonders bevorzugt 3.0 bis 3.7 beträgt.

Des weiteren betrifft die vorliegende Erfindung ein Verfahren zur Herstellung einer biaxial orientierten Mehrschichtfolie, wobei das Verfahren dadurch gekennzeichnet ist, dass die Folie nach deren Bildung aus einer schmelzflüssigen Phase, bevorzugt in einem kontinuierlichen Prozess, einem Zug in Maschinenrichtung sowie quer dazu ausgesetzt wird, so dass das Reckverhältnis der resultierenden biaxial orientierten Mehrschichtfolie in Maschinenrichtung 2.7 bis 3.5, besonders bevorzugt 2.8 bis 3.2 und quer zur Maschinenrichtung 2.8 bis 4.5, besonders bevorzugt 3.0 bis 3.7 beträgt.

Verfahren zur Herstellung einer orientierten Mehrschichtfolie wie oben beschrieben ist, gekennzeichnet durch folgende Schritte:
- Coextrusion der Mehrschichtfolie aus Granulat als Flach- oder Blasfolie, wobei wenigstens eine Folien-Schicht aus einem Blend nach einem der Ansprüche 6 - 10 gebildet wird;
- Abkühlen der Mehrschichtfolie auf unter 25°C, bevorzugt auf unter 15 °C, bevorzugt im Wasserbad oder mittels Kühlwalzen;
- Erwärmen der Mehrschichtfolie soweit, dass ihre Temperatur oberhalb der höchsten in der Mehrschichtfolie vorkommenden Glasübergangstemperatur liegt, bevorzugt auf eine Temperatur im Bereich von 40 °C bis 100°C, bevorzugt 40 °C bis 80 °C;
- Recken der Mehrschichtfolie in wenigstens einer Richtung, wobei bevorzugtermassen das Reckverhältnis in Maschinenrichtung 2,7 bis 3,5 beträgt und quer zur Maschinenrichtung 2,8 bis 4,0.

Des weiteren betrifft die vorliegende Erfindung zudem die Verwendung einer solchen biaxial orientierte Mehrschichtfolie als Verpackungsmaterial, bevorzugt in Form einer Schrumpffolie oder eines Schrumpfbeutels. Verpackt werden kann alles, was weder durch die beim Schrumpfen der Schrumpffolie oder des Schrumpfbeutels erzeugte Kraft (bzw. den Druck), noch durch das beim Verpacken angelegte Vakuum geschädigt wird. Es kann sich beispielsweise um Lager-, Transport-, oder Verkaufsverpackungen handeln. Die zu verpackenden Waren gehören bevorzugtermassen zu den Bereichen Nahrungsmittel, Technik, Elektro, Elektronik, Automobil, Konsumgüter oder Haushalt.

Die Verpackung kann Verstärkungseinlagen aus Karton oder Pappe enthalten.

Beispiele für zu verpackende Waren sind Wurst- und Fleischwaren, letztere auch mit Knochen, Halb- und Fertigwaren, Roh- und Kochschinken, Speck, Geräuchertes (Wurst, Fleisch, Fisch und Käse), Hobelfleisch, Bündnerfleisch, Rinder- und Schweinehälften, Pate bzw. Pasteten, Pizza, vorgekochte Teigwaren, Käse (Hart- und Weichkäse), Zahnräder, Ketten, Lager, Bremsklötze, Bremsscheiben, Linsen für technische Geräte bzw. Brillen, Montageteile, technische Komponenten oder Kleinteile aller Art in Gross- oder Portionspackungen.

Des weiteren betrifft die vorliegende Erfindung eine monoaxial orientierte, transparente Mehrschichtfolie, wobei in der Folie wenigstens eine Schicht aus einem Polymer-Blend, wie er oben angegeben wird, gebildet wird. Für eine monoaxial orientierte, transparente Mehrschichtfolie gelten die gleichen bevorzugten Ausführungsformen wie für eine biaxial orientierte, transparente Mehrschichtfolie, wobei das geforderte Schrumpfverhalten folgerichtig nur in Orientierungsrichtung erreicht werden kann.

Weitere bevorzugte Ausführungsformen der Erfindung sind in den abhängigen Ansprüchen beschrieben.

Die Herstellung der erfindungsgemässen Copolyamide erfolgt in an sich bekannter Weise in bekannten rührbaren Druckautoklaven mit einem Vorlagegefäss und einem Reaktionsgefäss:
Im Vorlagegefäss wird deionisiertes Wasser vorgelegt und die Monomere und Additive zugegeben. Danach wird mehrfach mit Stickstoff inertisiert. Unter Rühren wird auf 150 bis 230°C unter dem sich einstellenden Druck aufgeheizt, um eine homogene Lösung zu erhalten. Diese Lösung wird durch ein Sieb in das Reaktionsgefäss gepumpt und dort auf die gewünschte Reaktionstemperatur von 250 bis 310 °C bei einem Druck von maximal 30 bar aufgeheizt. Der Ansatz wird in der Druckphase für 0.5 bis 4 Stunden auf der Reaktionstemperatur gehalten. In der anschliessenden Entspannungsphase wird der Druck innerhalb von 1 bis 4 Stunden auf atmosphärischen Druck reduziert, wobei die Temperatur leicht sinken kann.

In der folgenden Entgasungsphase wird der Ansatz bei atmosphärischem Druck für 0.5 bis 1.5 Stunden auf einer Temperatur von 250 bis 340°C gehalten.

Die Polymerschmelze wird in Strangform ausgetragen, im Wasserbad bei 10 bis 80 °C abgekühlt und anschliessend granuliert. Das Granulat wird für 12 - 48 Stunden bei 80 bis 120 °C unter Stickstoff oder im Vakuum auf einen Wassergehalt von unter 0.1 Gew.-% getrocknet.

Sollte als Monomer teilweise Metaxylylendiamin verwendet werden, wird sowohl im Vorlagegefäss als auch im Reaktionsgefäss der Druck auf maximal 10 bar, bevorzugt maximal 6 bar geregelt.

Das erfindungsgemässe Polyamid hat eine relative Viskosität (gemessen bei 20 °C in 0,5 Gew.-%-iger Lösung in m-Kresol) von 1,50 - 2,15, bevorzugt von 1,55 - 2,05, besonders bevorzugt 1,60 - 1,95.

Die Einstellung der relativen Viskosität und damit der Molmasse kann in an sich bekannter Weise, z.B. über monofunktionelle Diamine oder Dicarbonsäuren, oder difunktionelle Diamine oder Dicarbonsäuren als Kettenregler erfolgen. Bevorzugte Kettenregler für die erfindungsgemässen Copolyamide sind Benzoesäure, Essigsäure oder Triacetondiamin. Solche werden in Konzentrationen von 20 bis 150 Mol pro Tonne Endprodukt, bevorzugt 30 bis 100 Mol pro Tonne Endprodukt, noch mehr bevorzugt 40 bis 80 Mol pro Tonne Endprodukt eingesetzt.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate, die gleichzeitig zur Reduktion der Verfärbung während der Verarbeitung führen. Die Katalysatoren werden im Bereich von 0.01 bis 0.5 Gew.-%, bevorzugt 0.03 bis 0.1 Gew.-% zugegeben.

Geeignete Entschäumer zur Vermeidung der Schaumbildung während der Entgasung sind wässrige, 10 %-ige Emulsionen, die Silicone oder Siliconderivate enthalten und in Mengen von 0.01 bis 1.0 Gew.-%, bevorzugt 0.01 bis 0.10 Gew.-% eingesetzt werden. Das Blend (Polyamidmischung) aus dem erfindungsgemässen Copolyamid kann als Dryblend oder Compound vorliegen. Zur Dryblendherstellung werden die getrockneten Granulate und gegebenenfalls weitere Additive (Zusatzstoffe) vermischt. Diese Mischung wird mittels eines Taumelmischers, Röhnradmischers oder Taumeltrockners 10 - 40 Minuten lang homogenisiert. Zur Vermeidung der Feuchtigkeitsaufnahme kann dies unter getrocknetem Schutzgas erfolgen.

Das homogenisierte Dryblend kann vor der Verwendung auch in einem Ein- oder Zweiwellenextruder oder in einem Schneckenkneter bei 230 °C bis 300 °C in schmelzeförmigem Zustand gemischt und anschliessend zu Granulat geformt werden. Das Granulat muss danach auf eine maximale Feuchte von 0.1 Gew.-% getrocknet werden.

Das Blend wird bevorzugt als Dryblend verwendet.

Besonders bevorzugt werden nur die Komponenten b., c. und d. als Dryblend vorgemischt (c und d. soweit vorhanden). Bei der Verarbeitung werden dann dieses Dryblend und die Komponente a. einzeln in die Verarbeitungsmaschine dosiert.

Im einfachsten Fall besteht das Blend nur aus den Komponenten a. und b., diese werden dann einzeln in die Verarbeitungsmaschine dosiert.

Zur Herstellung der biaxialorientierten Mehrschichtfolien können dem Fachmann bekannte Verfahren verwendet werden, wie zum Beispiel Double-Bubble, Trapped-Bubble oder Tenterframe, bei letzterem kann die biaxiale Orientierung sowohl simultan, als auch parallel erfolgen. Die erfindungsgemässen Blends sind besonders gut für das Double-Bubble-Verfahren geeignet.

Im allgemeinen werden die biaxialorientierten Mehrschichtfolien als Flach- oder Blasfolien coextrudiert. Jedoch können zusätzliche Schichten durch übliche, bekannte Beschichtungs- und/oder Laminationsverfahren aufgebracht werden. Es können aber auch Schichten entfernt werden, um eine gewünschte Schicht freizulegen oder Blasfolien können beim Zusammenlegen zu einer Flachfolie verblockt werden.

Für jede Schicht wird bevorzugt ein eigener Extruder verwendet, der mit den notwendigen Dosierungseinrichtungen ausgerüstet ist. Werden zwei oder mehr gleiche Schichten verwendet, können diese von einem einzigen Extruder stammen, dessen Schmelzestrom entsprechend geteilt wird.

Direkt nach der Herstellung wird die mehrschichtige Primärfolie bzw. der mehrschichtige Primärschlauch, kurz Mehrschichtfolie genannt, auf unter 25 °C, bevorzugt auf unter 15 °C gekühlt, um die Kristallisation zu verringern. Die Kühlung erfolgt zum Beispiel im Wasserbad oder mittels Kühlwalzen. Anschliessend wird die Mehrschichtfolie erneut aufgeheizt, und zwar soweit, dass ihre Temperatur oberhalb der höchsten in der Mehrschichtfolie vorkommenden Glasübergangstemperatur liegt. Die Temperatur der Mehrschichtfolie beträgt dann meist 40 °C bis 100 °C, bevorzugt 40°C bis 80 °C. Das Aufheizen kann im Wasserbad, mittels Walzen oder mittels IR-Strahler erfolgen.

Die so erwärmte Mehrschichtfolie wird anschliessend gereckt (orientiert). Das Reckverhältnis beträgt in Maschinenrichtung 2,7 bis 3,5 und quer zur Maschinenrichtung 2,8 bis 4,0.

Nach der Orientierung werden an der Mehrschichtfolie noch eine oder mehrere Fixierungen bei 30 °C bis 95 °C, bevorzugt 40 °C bis 70 °C Folientemperatur durchgeführt. Die Temperierung der Mehrschichtfolie erfolgt dabei jeweils im Wasserbad, im Luftstrom oder mittels IR-Strahler. Diese Fixierung führt zu einer Relaxation der Spannungen in der orientierten Mehrschichtfolie.

Vor dem Aufwickeln der orientierten Mehrschichtfolie können noch deren Ränder beschnitten werden. Der dabei anfallende Randabschnitt kann gehäckselt und als Regrind in einer der Schichten der Mehrschichtfolie wiederverwendet oder verkauft werden.

Die Blends werden bei Massetemperaturen von 200 °C bis 295 °C, bevorzugt 220 °C bis 280 °C verarbeitet.

### BEISPIELE UND VERGLEICHSBEISPIELE

Die Erfindung wird nachfolgend anhand von Beispielen (erfindungsgemäss) und Vergleichsbeispielen (nach dem Stand der Technik) näher beschrieben, wobei die Vergleichsbeispiele die Abgrenzung zum Stand der Technik verdeutlichen.

In der Folge soll nun ein spezifisches Herstellungsbeispiel für ein erfindungsgemässes Copolyamid, ein erfindungsgemässes Blend und die Verarbeitung des erfindungsgemässen Blends zur biaxial orientierten Mehrschichtfolie angegeben werden.

Die Herstellung eines erfindungsgemässen Copolyamids wird an Hand des in den Beispielen Nr. 7, 8 und 9 (vergleiche weiter unten) verwendeten PA 69/610/6I erläutert:
- Im Vorlagegefäss eines 300 l Druckautoklaven werden 42 kg deionisiertes Wasser vorgelegt und 8.1 kg Isophthalsäure, 47.55 kg Azelainsäure und 37.35 kg Sebazinsäure eingerührt. Bei abgestelltem Rührer werden 56.4 kg Hexamethylendiamin und zum Schluss 0.36 kg Essigsäure zugegeben.
- Nach 10-maliger Inertisierung wird bis auf 190 °C aufgeheizt, wobei der Rührer nach Erreichen von 180 °C wieder eingeschalten wird. Die homogene Lösung wird bei 190°C durch ein Sieb in das Reaktiongefäss gepumpt.
- Unter Rühren wird dort der Ansatz auf 270 °C aufgeheizt und 1 Stunde bei 10 bar in der Druckphase gehalten. Innerhalb von 2.5 Stunden wird auf atmosphärischen Druck entspannt und anschliessend bei 270 °C 40 Minuten entgast.
- Die Polymerschmelze wird ausgetragen, im Wasserbad (20 °C) abgekühlt und granuliert. Das Granulat wird bei 100°C unter Stickstoff auf einen Wassergehalt von unter 0.1 Gew.-% getrocknet.

An Hand des in Beispiel Nr. 9 (vergleiche weiter unten) verwendeten Blends wird die Herstellung des erfindungsgemässen Blends erläutert:

Die Granulate von PA 69/610/6I, PA 6I/6T und PA 6/66/12 werden bei 100 °C im Vakuum auf einen Feuchtegehalt von jeweils unter 0.1 Gew.-% getrocknet.

Die getrockneten Granulate werden werden im Verhältnis PA 69/610/6I : PA 6I/6T : PA 6/66/12 = 5 : 1 : 2 zu einem Dryblend vermischt. Diese Mischung wird mittels eines Taumelmischers ca. 20 Minuten lang homogenisiert.

Bei der Verarbeitung werden dieses homogenisierte Dryblend und die Komponente a. PA 6/66 im Verhältnis 4 : 6 in die Extruder der Schichten 3 und 5 der Verarbeitungsmaschine dosiert.

Bei der Verarbeitungsmaschine handelt es sich um eine Double-Bubble-Anlage mit sieben Extrudern und zwei Fixierungen zur Herstellung von biaxial orientierten 7-Schicht-Blasfolien. Der Folienaufbau und die Schichtdicken lauten von Aussen nach Innen:

| | | | | | | | | |
|---|---|---|---|---|---|---|---|---|
| Aufbau: | PA 6/66 + AB / HV / Blend / EVOH / Blend / HV / LDPE | | | | | | | |
| Schicht-Nr.: | 1 | 2 | 3 | 4 | 5 | 6 | 7 | |
| Schichtdicken: | 3 | 3 | 8 | 3 | 8 | 3 | 17 | µm |

Die Gesamtdicke der Folie beträgt 45 ± 4 µm

Verwendete Materialien:
- PA 6/66: UBE 5043 B der Firma UBE
- AB: GRILON MB 7361 FS der Firma EMS-CHEMIE
- HV: Admer QF 551 (PP-Basis) der Firma Mitsui
- EVOH: Eval SP 482 B (32 Mol-%) der Firma Kuraray
- LDPE: Affinity 1880 (metallocen) der Firma Dow

Dabei bedeuten:
- AB:: Antiblockmasterbatch
- HV:: Haftvermittler
- PP:: Polypropylen
- LDPE:: Low Density Polyethylen

Die Schicht 1 (PE 6/66 + AB) setzt sich aus 98 Gew.-% PA 6/66 und 2 Gew.-% Antiblockmasterbatch zusammen.

Bei den Extrudern für das erfindungsgemässe Blend Nr. 9 (Schichten 3 und 5) werden folgende Zylindertemperaturen in °C eingestellt (Einzug zur Düse): 230/240/260/260/260/240/230, so dass sich eine Massetemperatur von 260 °C ergibt.

Die Extruder für die anderen Schichten werden so eingestellt, dass folgende Massetemperaturen in °C resultieren:

| | | | | | |
|---|---|---|---|---|---|
| Schicht-Nr.: | 1 | 2 | 4 | 6 | 7 |
| Massetemperatur [°C]: | 230 | 240 | 210 | 240 | 230 |

Das Reckverhältnis in Maschinenrichtung beträgt 3,1 und quer zur Maschinenrichtung 3,5.

Die Flachschlauch-Fixierung erfolgt im Wasserbad bei 52 °C und die Thermofixierung im lufttemperierten Blasentunnel bei 55°C.

Die Produktionsgeschwindigkeit beträgt 34 m/min.

Alle Blendzusammensetzungen der Vergleichsbeispiele und der Beispiele werden in Form solcher biaxial orientierten 7-Schicht-Blasfolien geprüft.

Zur Prüfung der Mehrschichtfolien und zur Charakterisierung der Edukte werden folgende Messvorschriften verwendet:
Schmelzpunkt und Glasumwandlungstemperatur (Tg):
   ISO-Norm 11357-1/-2
   Granulat
   Die Differential Scanning Calorimetry (DSC) wurde mit Aufheizrate von 20 K/min durchgeführt.
   Beim Schmelzpunkt wird die Temperatur am Peakmaximum, bei der Glasumwandlungstemperatur die Temperatur am Onset angegeben.
Relative Viskosität
   ISO 307
   0,5 Gew.-%-ige m-Kresollösung
   Temperatur 20 °C
   Berechnung der relativen Viskosität (RV) nach RV = t/t0 in Anlehnung an Abschnitt 11 der Norm.
Heissschrumpf
   Mehrschichtfolie
   Temperatur: 90 °C
   Auf einem Stück der Mehrschichtfolie wird ein Quadrat mit 10 cm Seitenlänge und die Maschinenrichtung eingezeichnet. Das so markierte Folienstück wird für 5 s vollständig in Wasser mit einer Temperatur von 90 °C eingetaucht. Das danach am Folienstück anhaftende Wasser wird mit einem Tuch abgewischt. Nach 5 min Abkühlen auf 23 °C werden die Seitenlängen vermessen. Die Messung wird an fünf Folienstücken durchgeführt. Der arithmetische Mittelwert der fünf Messungen wird angegeben.
Kaltschrumpf
   Mehrschichtfolie
   Temperatur: 23°C
   Auf einem Stück der Mehrschichtfolie wird ein Quadrat mit 10 cm Seitenlänge und die Maschinenrichtung eingezeichnet. Das so markierte Folienstück wird für 24 h vollständig in Wasser mit einer Temperatur von 23 °C eingetaucht. Das danach am Folienstück anhaftende Wasser wird mit einem Tuch abgewischt und die Seitenlängen werden vermessen. Die Messung wird an fünf Folienstücken durchgeführt. Der arithmetische Mittelwert der fünf Messungen wird angegeben.
Lichttransmission und Haze:
   ASTM D 1003
   Mehrschichtfolie
   Temperatur 23 °C
   Messgerät Haze Gard plus der Firma Byk Gardner mit CIE Lichtart C. Der Lichttransmissions- und der Hazewert werden in % der eingestrahlten Lichtmenge angegeben.

Die in den Vergleichsbeispielen und Beispielen verwendeten Polyamide und deren Eigenschaften sind in Tabelle 2 zusammengefasst.

**Tabelle 2 Verwendete Polyamide**

| **Polyamid** | **relative Viskosität m-Kresol, 20 °C 0,5 Gew.-%** | **Schmelzpunkt °C** | **Zusammensetzung Mol.-%** |
|---|---|---|---|
| 6/66 | 4.1 * | 194 | 85/15 |
| 6 | 4.1 * | 222 | - |
| 69/66/6I | 1.8 | 170 | 52/38/10 |
| 6/69 | 1.85 | 130 | 56/44 |
| 66/610 | 2.0 | 200 | 55/45 |
| 66/69/610/6I | 1.71 | 165 | 10/52/28/10 |
| 69/610/6I | 1.72 | 171 | 52/38/10 |
| 6I/6T | 1.52 | 125** | 67/33 |
| 6/66/12 | 1.6 | 147 | 64/23/13 |
| | | | |
| * 1 Gew.-% in 96 %-iger Schwefelsäure bei 20 °C | | | |
| ** Glasübergangstemperatur | | | |

Tabelle 3 zeigt die Zusammensetzungen der in den Vergleichsbeispielen geprüften Blends und die an den Mehrschichtfolien erhaltenen Messergebnisse. Die Blends werden dabei jeweils in den Schichten 3 und 5 eingesetzt.

**Tabelle 3 Vergleichsbeispiele, wobei die Blends in den Schichten 3 und 5 eingesetzt werden.**

| | | | **Vergleichsbeispiele** | | | | |
|---|---|---|---|---|---|---|---|
| **Komponenten** | **Einheit** | **Bedingung** | **1** | **2** | **3** | **4** | **5** |
| PA 6/66 | Gew.% | - | 100 | 80 | 70 | 70 | - |
| PA 6 | Gew.% | - | - | - | - | - | 100 |
| PA 69/66/6I | Gew.-% | - | - | - | 30 | - | - |
| PA 6/69 | Gew.-% | - | - | 20 | - | - | - |
| PA 66/610 | Gew.-% | - | - | - | - | 30 | - |
| **Prüfungen*** | | | | | | | |
| Heissschrumpf | % | quer** | 32 | 36 | 35 | 40 | 22 |
| bei 90°C | % | längs** | 30 | 32 | 32 | 35 | 18 |
| Kaltschrumpf | % | quer** | 4 | 6 | 6 | 6 | 2 |
| bei 23°C | % | längs** | 6 | 8 | 8 | 8 | 3 |
| Lichttransmission | % | - | 94.0 | - | 94.2 | - | 93.2 |
| Haze | % | - | 5.5 | - | 5.2 | - | 6.4 |
| | | | | | | | |
| * Alle Prüfungen wurden an biaxialorientierten 7-Schichtfolien durchgeführt. | | | | | | | |
| ** Bezogen auf die Maschinenrichtung der Folie | | | | | | | |

Die in den Vergleichsbeispielen verwendeten Copolyamide PA 69/66/6I, PA 6/69 und PA 66/610, werden im Stand der Technik als schrumpffördernd offenbart. PA 6/66 oder PA 6 sind als Blendkomponenten in solchen Anwendungen seit langem Stand der Technik. Die Vergleichsbeispiele 1 und 5 geben die Referenzwerte für die unmodifizierten Basiskomponenten PA 6/66 bzw. PA 6 an. In der Blendzusammensetzung des Vergleichsbeispiels 3 wird als PA 69/66/6I ein Copolyamid verwendet, dessen Zusammensetzung der Offenbarung von EP 0 617 072 A1 entspricht.

Keine der Blendzusammensetzungen der Vergleichsbeispiele erfüllt die Hauptanforderung sowohl bezüglich des Heisschrumpfes von mindestens 35 %, als auch des Kaltschrumpfes von maximal 5 % jeweils in mindestens einer Richtung.

Tabelle 4 zeigt die erfindungsgemässen Beispiele mit erfindungsgemässen Blendzusammensetzungen und die an den Mehrschichtfolien erhaltenen Messergebnisse. Die Blends werden dabei jeweils in den Schichten 3 und 5 eingesetzt.

**Tabelle 4 Beispiele, wobei die erfindungsgemässen Blends in den Schichten 3 und 5 eingesetzt werden.**

| | | | **Beispiele** | | | | | | | |
|---|---|---|---|---|---|---|---|---|---|---|
| **Komponenten** | **Einheit** | **Bedingung** | **5** | **6** | **7** | **8** | **9** | **10** | **11** | **12** |
| PA 6/66 | Gew.-% | - | 70 | 65 | 70 | 65 | 60 | 65 | - | - |
| PA 6 | Gew.% | - | - | - | - | - | - | - | 70 | 65 |
| PA 66/69/610/6I | Gew.% | - | 30 | 30 | - | - | - | 20 | 30 | 30 |
| PA 69/610/6I | Gew.-% | - | - | - | 30 | 30 | 25 | - | - | - |
| PA 6I/6T | Gew.-% | - | - | 5 | - | 5 | 5 | 5 | - | 5 |
| PA 6/66/12 | Gew.% | - | - | - | - | - | 10 | 10 | - | - |
| **Prüfungen*** | | | | | | | | | | |
| Heissschrumpf | % | quer** | 41 | 47 | 42 | 46 | 42 | 42 | 40 | 41 |
| bei 90°C | % | längs** | 36 | 43 | 40 | 44 | 40 | 40 | 38 | 40 |
| Kaltschrumpf | % | quer** | 4 | 1 | 3 | 1 | 2 | 2 | 3 | 2 |
| bei 23 °C | % | längs** | 5 | 4 | 3 | 3 | 3 | 3 | 5 | 3 |
| Lichttransmission | % | - | 93.2 | 94.0 | 93.6 | 94.2 | 93.7 | 93.5 | 93.0 | 93.3 |
| Haze | % | - | 6.5 | 5.5 | 5.7 | 5.5 | 5.9 | 5.8 | 6.7 | 6.0 |
| | | | | | | | | | | |
| * Alle Prüfungen wurden an biaxialorientierten 7-Schichtfolien durchgeführt. | | | | | | | | | | |
| ** Bezogen auf die Maschinenrichtung der Folie | | | | | | | | | | |

Alle erfindungsgemässen Blendzusammensetzungen der Beispiele zeigen ein klar besseres Schrumpfverhalten als die Blendzusammensetzungen der Vergleichsbeispiele.

Alle erfindungsgemässen Blendzusammensetzungen der Beispiele erfüllen die Hauptanforderungen an den Heiss- und Kaltschrumpf von wenigstens 35 % bzw. maximal 5 % in wenigstens einer Richtung.

Auch die Nebenanforderungen an die Lichttransmission (wenigstens 90 %) und den Haze (höchstens 10 %) werden von den erfindungsgemässen Blendzusammensetzungen der Beispiele erfüllt.

Die Blendzusammensetzung von Beispiel 5 zeigt gegenüber der Blendzusammensetzung von Vergleichsbeispiel 3 sowohl einen deutlich verbesserten Heissschrumpf, als auch einen deutlich verbesserten Kaltschrumpf und dies in beiden Richtungen.

Auch die Blendzusammensetzung des Beispiels 7 zeigt gegenüber der Blendzusammensetzung des Vergleichsbeispiels 3 die gleichen Vorteile beim Heiss- und Kaltschrumpf wie diejenige des Beispiels 5.

Das Schrumpfverhalten (Heiss- und Kaltschrumpf) der Blendzusammensetzung des

Beispiels 7 ist gegenüber derjenigen des Beispiels 5 nochmals verbessert, so dass also das Copolyamid PA 69/610/6I gegenüber dem Copolyamid PA 66/69/610/6I weitere Vorteile zeigt.

Die Blendzusammensetzungen der Beispiele 5 und 7 zeigen vor allem beim Kaltschrumpf Vorteile gegenüber der Blendzusammensetzung von Vergleichsbeispiel 4.

Der Vergleich der Beispiele 6 und 5 bzw. der Beispiele 8 und 7 zeigt den positiven Einfluss des PA 6I/6T (Komponente c.) sowohl auf das Schrumpfverhalten, als auch auf die optischen Eigenschaften (Lichttransmission bzw. Haze) der Mehrschichtfolie. Entsprechendes zeigt sich auch beim Vergleich der Beispiele 11 und 12.

Die Blendzusammensetzungen der Beispiele 9 und 10 zeigen, dass die Modifikation der Foliensteifheit mittels des PA 6/66/12 (Komponente d.) nicht auf Kosten des Schrumpfverhaltens erfolgt.

## Patentansprüche

1. Copolyamid polykondensiert aus einem Diaminanteil und einem Disäureanteil, wobei der Diaminanteil gebildet wird aus Hexamethylendiamin und wobei sich der Disäureanteil zusammensetzt aus
A. Azelainsäure;
B. Sebazinsäure;
C. Isophthalsäure;
D. Adipinsäure;
wobei die Summe der Anteile A. und B. wenigstens 70 Mol-% ausmacht und sowohl A. als auch B. mehr als 0 Mol.-% ausmachen,
wobei der Anteil C. 3 - 15 Mol-% ausmacht,
wobei der Anteil D. 0 - 27 Mol-% ausmacht,
und wobei die Summe der Anteile A.-D. die 100 Mol-% des gesamten Disäureanteils ausmacht

2. Copolyamid nach Anspruch 1, **dadurch gekennzeichnet, dass** die Summe der Anteile A. und B. wenigstens 75 Mol-%, bevorzugt wenigstens 85 Mol-%, insbesondere bevorzugt im Bereich von 90 - 97 Mol-% ausmacht.

3. Copolyamid nach einem der vorhergehenden Ansprüche, **dadurch gekennzeichnet, dass** das Mol-Verhältnis von A. zu B. im Bereich von 3:1 bis 1:1, bevorzugt im Bereich von 2:1 bis 1:1, besonders bevorzugt im Bereich von 1,9:1 bis 1,2:1 liegt.

4. Copolyamid nach einem der vorhergehenden Ansprüche, **dadurch gekennzeichnet, dass** der Anteil C. im Bereich von 5 - 12 Mol-%, bevorzugt im Bereich von 8 - 10 Mol-% ausmacht.

5. Copolyamid nach einem der vorhergehenden Ansprüche, **dadurch gekennzeichnet, dass** der Anteil D im Bereich von 0 - 10 Mol-% liegt.

6. Polymer-Blend enthaltend ein Copolyamid nach einem der vorhergehenden Ansprüche.

7. Polymer-Blend nach Anspruch 6 **dadurch gekennzeichnet, dass** es aus folgenden Komponenten besteht:
a. Copolyamid 6/66 und/oder Polyamid 6;
b. Copolyamid nach einem der Ansprüche 1 - 5;
sowie optional
c. Copolyamid 6I/6T;
d. Copolyamid 6/66/12
e. Additive.

8. Polymer-Blend nach Anspruch 7, **dadurch gekennzeichnet, dass**
der Anteil a. im Bereich von 50 - 90 liegt,
der Anteil b. im Bereich von 10 - 50 liegt,
der Anteil c. im Bereich von 0 - 10 liegt,
der Anteil d. im Bereich von 0 - 30 liegt, und
der Anteil von e. im Bereich von 0 - 10 liegt,
wobei sich die Komponenten a. bis e. zu 100 Gew.-% addieren.

9. Polymer-Blend nach einem der Ansprüche 7 oder 8, **dadurch gekennzeichnet, dass** das Copolyamid 6I/6T der Komponente c. bei einer Summe der Disäuren von 100 Mol-% maximal 40 Mol-%, bevorzugt maximal 35 Mol-%, insbesondere bevorzugt 20 - 35 Mol-% Terephthalsäure enthält.

10. Polymer-Blend nach einem der Ansprüche 7 - 9, **dadurch gekennzeichnet, dass** das Copolyamid PA 6/66/12 der Komponente d. besteht aus 50 - 70 Mol-% der Wiederholungseinheit 6, 10 - 30 Mol-% der Wiederholungseinheit 66 und 10 - 40 Mol-% der Wiederholungseinheit 12, wobei besonders bevorzugt wird, dass das Copolyamid PA 6/66/12 der Komponente d. besteht aus 64 Mol-% der Wiederholungseinheit 6, 23 Mol-% der Wiederholungseinheit 66 und 13 Mol-% der Wiederholungseinheit 12.

11. Orientierte Mehrschichtfolie, mit wenigstens einer Schicht aus einem Polymer-Blend nach einem der Ansprüche 6 - 10, **dadurch gekennzeichnet, dass** die Mehrschichtfolie in Orientierungsrichtung einen Heissschrumpf bei 90 °C von mindestens 35 % und einen Kaltschrumpf von maximal 6 %.

12. Biaxial orientierte Mehrschichtfolie, mit wenigstens einer Schicht aus einem Polymer-Blend nach einem der Ansprüche 6 - 10, **dadurch gekennzeichnet, dass** die Mehrschichtfolie einen Heissschrumpf bei 90 °C in wenigstens einer Richtung von mindestens 35 % und einen Kaltschrumpf in wenigstens einer Richtung von maximal 6 % aufweist.

13. Biaxial orientierte Mehrschichtfolie nach Anspruch 12, **dadurch gekennzeichnet, dass** die Mehrschichtfolie aus 3 - 11 Schichten besteht, wobei 1 - 5 dieser Schichten, aus einem Polymer-Blend nach einem der Ansprüche 6 - 10 bestehen, wobei diese Schichten aus einem Polymer-Blend nach einem der Ansprüche 6 - 10 eingebettet sein können und/oder aussen und eine oder beide der Oberflächen der Mehrschichtfolie bildend liegen können.

14. Biaxial orientierte Mehrschichtfolie nach Anspruch 12 - 13, **dadurch gekennzeichnet, dass** die Mehrschichtfolie aus 5 - 9 Schichten besteht und 1, 2 oder 3 Schichten aus einem Polymer-Blend nach einem der Ansprüche 6 - 10 enthält.

15. Verfahren zur Herstellung einer orientierten Mehrschichtfolie nach einem der Ansprüche 11 - 14, **gekennzeichnet durch** folgende Schritte:
- Coextrusion der Mehrschichtfolie aus Granulat als Flach- oder Blasfolie, wobei wenigstens eine Folien-Schicht aus einem Blend nach einem der Ansprüche 6 - 10 gebildet wird;
- Abkühlen der Mehrschichtfolie auf unter 25 °C;
- Erwärmen der Mehrschichtfolie soweit, dass ihre Temperatur oberhalb der höchsten in der Mehrschichtfolie vorkommenden Glasübergangstemperatur liegt;
- Recken der Mehrschichtfolie in wenigstens einer Richtung.

16. Verwendung einer orientierten Mehrschichtfolie nach einem der Ansprüche 11 - 14, als Verpackungsmaterial, bevorzugt für die Bereiche Nahrungsmittel, Technik, Elektro, Elektronik, Automobil, Konsumgüter oder Haushalt, insbesondere bevorzugt in Form einer Schrumpffolie oder eines Schrumpfbeutels.

## Claims

1. Copolyamide polycondensed from a diamine fraction and a diacid fraction, where the diamine fraction is composed of hexamethylenediamine and where the diacid fraction is composed of
A. azelaic acid;
B. sebacic acid;
C. isophthalic acid;
D. adipic acid;
where the entirety of the fractions A. and B. makes up at least 70 mol% and both A. and B. make up more than 0 mol%,
where the fraction C. makes up from 3 to 15 mol%,
where the fraction D. makes up from 0 to 27 mol%,
and where the entirety of the fractions A.-D. makes up 100 mol% of the entire diacid fraction.

2. Copolyamide according to Claim 1, **characterized in that** the entirety of the fractions A. and B. makes up at least 75 mol%, preferably at least 85 mol%, particularly preferably from 90 to 97 mol%.

3. Copolyamide according to any of the preceding claims, **characterized in that** the molar ratio of A. to B. is in the range from 3:1 to 1:1, preferably in the range from 2:1 to 1:1, particularly preferably in the range from 1.9:1 to 1.2:1.

4. Copolyamide according to any of the preceding claims, **characterized in that** the fraction C. makes up from 5 to 12 mol%, preferably from 8 to 10 mol%.

5. Copolyamide according to any of the preceding claims, **characterized in that** the proportion of D. is in the range from 0 to 10 mol%.

6. Polymer blend comprising a copolyamide according to any of the preceding claims.

7. Polymer blend according to Claim 6, **characterized in that** it is composed of the following components:
a. 6/6,6 copolyamide and/or polyamide 6;
b. copolyamide according to any of Claims 1 to 5;
and also optionally
c. 6,I/6,T copolyamide;
d. 6/6,6/12 copolyamide;
e. additives.

8. Polymer blend according to Claim 7, **characterized in that**
the proportion of a. is in the range from 50 to 90,
the proportion of b. is in the range from 10 to 50,
the proportion of c. is in the range from 0 to 10,
the proportion of d. is in the range from 0 to 30, and
the proportion of e. is in the range from 0 to 10,
where the entirety of components a. to e. is 100% by weight.

9. Polymer blend according to Claim 7 or 8, **characterized in that**, where the entirety of the diacids is 100 mol%, the 6,I/6,T copolyamide of component c. comprises at most 40 mol%, preferably at most 35 mol%, particularly preferably from 20 to 35 mol%, of terephthalic acid.

10. Polymer blend according to any of Claims 7 to 9, **characterized in that** the 6/6,6/12 copolyamide of component d. is composed of from 50 to 70 mol% of the 6 repeat unit, from 10 to 30 mol% of the 6,6 repeat unit and from 10 to 40 mol% of the 12 repeat unit, where it is particularly preferable that the 6/6,6/12 copolyamide of component d. is composed of 64 mol% of the 6 repeat unit, 23 mol% of the 6,6 repeat unit and 13 mol% of the 12 repeat unit.

11. Oriented multilayer film with at least one layer made of a polymer blend according to any of Claims 6 to 10, **characterized in that** the multilayer film has, in the direction of orientation, a heat shrinkage at 90°C of at least 35% and a low-temperature shrinkage of at most 6%.

12. Biaxially oriented multilayer film with at least one layer made of a polymer blend according to any of Claims 6 to 10, **characterized in that** the multilayer film has a heat shrinkage at 90°C of at least 35% in at least one direction and a low-temperature shrinkage of at most 6% in at least one direction.

13. Biaxially oriented multilayer film according to Claim 12, **characterized in that** the multilayer film is composed of from 3 to 11 layers, where from 1 to 5 of the said layers are made of a polymer blend according to any of Claims 6 to 10, where the said layers made of a polymer blend according to any of Claims 6 to 10 can have been embedded, and/or can be external, forming one or both of the surfaces of the multilayer film.

14. Biaxially oriented multilayer film according to Claim 12 or 13, **characterized in that** the multilayer film is composed of from 5 to 9 layers, and comprises 1, 2 or 3 layers made of a polymer blend according to any of Claims 6 to 10.

15. Process for producing an oriented multilayer film according to any of Claims 11 to 14, **characterized by** the following steps:
- coextrusion of the multilayer film from pellets in the form of flat or blown film, where at least one film layer is formed from a blend according to any of Claims 6 to 10;
- cooling of the multilayer film to below 25°C;
- heating of the multilayer film to the extent that its temperature is above the highest glass transition temperature occurring in the multilayer film;
- stretching of the multilayer film in at least one direction.

16. Use of an oriented multilayer film according to any of Claims 11 to 14 as packaging material, preferably for the sectors of food, engineering, electricals, electronics, automobiles or consumer goods, or the household sector, particularly preferably in the form of a shrink film or of a shrink bag.

## Revendications

1. Copolyamide polycondensé à partir d'une fraction diamine et d'une fraction diacide, la fraction diamine étant constituée d'hexaméthylènediamine et la fraction diacide étant composée de
A. acide azélaïque ;
B. acide sébacique ;
C. acide isophtalique ;
D. acide adipique ;
la somme des fractions A. et B. représentant au moins 70 % en moles et aussi bien A. que B. représentant plus de 0 % en moles,
la fraction C représentant 3 - 15 % en moles,
la fraction D représentant 0 - 27 % en moles,
et la somme des fractions A.-D. constituant 100 % en moles de la fraction diacide totale.

2. Copolyamide selon la revendication 1, **caractérisé en ce que** la somme des fractions A. et B. représente au moins 75 % en moles, de préférence au moins 85 % en moles, de façon particulièrement préférée dans la plage de 90 - 97 % en moles.

3. Copolyamide selon l'une quelconque des revendications précédentes, **caractérisé en ce que** le rapport molaire de A. à B. se situe dans la plage de 3:1 à 1:1, de préférence dans la plage de 2:1 à 1:1, de façon particulièrement préférée dans la plage de 1,9:1 à 1,2:1.

4. Copolyamide selon l'une quelconque des revendications précédentes, **caractérisé en ce que** la fraction C. représente dans la plage de 5 - 12 % en moles, de préférence dans la plage de 8 - 10 % en moles.

5. Copolyamide selon l'une quelconque des revendications précédentes, **caractérisé en ce que** la fraction D se situe dans la plage de 0 - 10 % en moles.

6. Mélange de polymères contenant un copolyamide selon l'une quelconque des revendications précédentes.

7. Mélange de polymères selon la revendication 6, **caractérisé en ce qu'**il est constitué des composants suivants :
a. copolyamide 6/66 et/ou polyamide 6 ;
b. copolyamide selon l'une quelconque des revendications 1 - 5 ;
ainsi qu'en option
c. copolyamide 6I/6T ;
d. copolyamide 6/66/12
e. additifs.

8. Mélange de polymères selon la revendication 7, **caractérisé en ce que**
la fraction a. se situe dans la plage de 50 - 90,
la fraction b. se situe dans la plage de 10 - 50,
la fraction c. se situe dans la plage de 0 - 10,
la fraction d. se situe dans la plage de 0 - 30, et
la fraction de e. se situe dans la plage de 0 - 10,
la somme des composants a. à e. étant égale à 100 % en poids.

9. Mélange de polymères selon l'une quelconque des revendications 7 et 8, **caractérisé en ce que** le copolyamide 6I/6T du composant c. contient pour une somme des diacides de 100 % en moles au maximum 40 % en moles, de préférence au maximum 35 % en moles, de façon particulièrement préférée 20-35 % en moles d'acide téréphtalique.

10. Mélange de polymères selon l'une quelconque des revendications 7 à 9, **caractérisé en ce que** le copolyamide PA 6/66/12 du composant d. est constitué de 50 - 70 % en moles du motif répétitif 6, de 10 - 30 % en moles du motif répétitif 66 et de 10 - 40 % en moles du motif répétitif 12, de façon particulièrement préférée le copolyamide PA 6/66/12 du composant d. étant constitué de 64 % en moles du motif répétitif 6, 23 % en moles du motif répétitif 66 et 13 % en moles du motif répétitif 12.

11. Film multicouche orienté, comportant au moins une couche d'un mélange de polymères selon l'une quelconque des revendications 6 - 10, **caractérisé en ce que** le film multicouche présente dans le sens de l'orientation un retrait à chaud à 90 °C d'au moins 35 % et un retrait à froid d'au maximum 6 %.

12. Film multicouche orienté biaxialement, comportant au moins une couche d'un mélange de polymères selon l'une quelconque des revendications 6 - 10, **caractérisé en ce que** le film multicouche présente dans au moins une direction un retrait à chaud à 90 °C d'au moins 35 % et dans au moins une direction un retrait à froid d'au maximum 6 %.

13. Film multicouche orienté biaxialement selon la revendication 12, **caractérisé en ce que** le film multicouche est constitué de 3 - 11 couches, de 1 - 5 de ces couches étant constituées d'un mélange de polymères selon l'une quelconque des revendications 6 - 10, ces couches en un mélange de polymères selon l'une quelconque des revendications 6 - 10 pouvant être incorporés et/ou se trouver à l'extérieur et constituer une surface ou les deux surfaces du film multicouche.

14. Film multicouche orienté biaxialement selon la revendication 12 - la revendication 13, **caractérisé en ce que** le film multicouche est constitué de 5 - 9 couches et contient 1, 2 ou 3 couches à base d'un mélange de polymères selon l'une quelconque des revendications 6 - 10.

15. Procédé pour la fabrication d'un film multicouche orienté selon l'une quelconque des revendications 11 - 14, **caractérisé par** les étapes suivantes :
- coextrusion du film multicouche à partir d'un produit granulé, sous forme de film plat ou de film soufflé, au moins une couche du film étant constituée d'un mélange selon l'une quelconque des revendications 6 - 10 ;
- refroidissement du film multicouche jusqu'au dessous de 25°C ;
- chauffage du film multicouche jusqu'à ce que sa température se situe au-dessus de la plus haute température de transition vitreuse existant dans le film multicouche ;
- étirage du film multicouche dans au moins une direction.

16. Utilisation d'un film multicouche orienté selon l'une quelconque des revendications 11 - 14, en tant que matériau d'emballage, de préférence pour les secteurs alimentaire, industriel, électrique, électronique, automobile, des biens de consommation ou ménager, en particulier de préférence sous forme d'un film rétractable ou d'un sachet rétractable.
